# EUROPEAN PATENT APPLICATION

(11) **EP 2 363 326 A1**
(43) Date of publication of application: **07.09.2011**
(21) Application number: 11156461.3
(22) Date of filing: 01.03.2011
(51) Int. Cl.: B60R 21/01, B60R 22/00

(54) **Vehicle occupant restraint controller**

(30) Priority: 01.03.2010 GB 1003376
(71) Applicant: Nissan Motor Manufacturing (UK) Ltd., Cranfield Bedfordshire MK43 0DB (GB)
(72) Inventor: Fraser, Simon, Cranfield, Bedfordshire MK430DB (GB)

(57) **Abstract**

A deactivation system 10 for a vehicle occupant restraint system having one or more deployable occupant restraints 5 is provided, allowing the driver to deactivate and reactivate at least one front passenger side airbag. The deactivation system comprises a display 14, a user input device 13, and a restraint system controller 12. The restraint system controller 12 is arranged to generate a menu of options 14m that is presented to the user via the display 14, and to control the status of the deployable occupant restraint 5 in dependence on a selection made by the driver via the input device 13. The display means may comprise a touch sensitive screen (24, Fig. 4), with graphic symbols 24g in a sub-menu 24sm of a menu 24m. Numerals 13 and 103 (Fig. 3) represent data input from vehicle-mounted sensors (not shown), e.g. a seat occupancy sensor.

## Description

### Field of the invention.

The invention is concerned with the control of restraint devices in a vehicle and particularly, but not exclusively, to the control of airbags and safety belts for the front passenger of a passenger or commercial vehicle. Aspects of the invention relate to an apparatus, to a system, to a method and to a vehicle.

### Background of the invention.

Modern vehicles intended for use on public roads such as passenger cars are frequently fitted with deployable restraint devices such as airbags and safety belt pretensioners. These devices are intended to deploy in the event of a sudden change in acceleration of the vehicle associated with a collision or other accident. The devices are positioned around the occupants, integrated into structures such as the instrument panel or seat and are thus hidden from view until they are required to restrain the occupant.

Due to the nature of real world road accidents, the restraint devices must act quickly once they are deployed, to ensure they position themselves relative to the occupant in a timely manner and restrain the occupant correctly. Such conditions demand that some devices, such as airbags, located some distance from the occupant in the instrument panel or similar structure, must move quickly once deployment is initiated or triggered.

The speed of deployment, whilst critical to the effectiveness of the device, may pose a hazard in itself, especially if an occupant is in close proximity to the device when it is deployed. Such situations are known as 'out of position' events, referring to the occupant's unusually close proximity to the device at the time of deployment. To mitigate any potential risk posed to the occupants in out of position events, considerable care is taken by the motor industry to tune the deployment characteristics of the restraint devices during the initial deployment stages. Typically, modern passenger airbags, mounted in the surface of the instrument panel in front of the front passenger, have their initial deployment stage, or 'punch-out', tuned to minimise the initial deployment forces so that the airbag may deflect around an obstacle rather than push it away.

However, the motor industry is always looking to improve vehicle safety and a common measure taken in passenger cars is to provide an airbag deactivation or cut-off switch, arranged to temporarily disable the front airbag on the passenger's side. The purpose of such a switch is to give the user the option to temporarily de-activate the front passenger's airbag, for example when transporting an infant in the front passenger seat in a rearward facing child seat. In such a situation, the child seat is restrained within the vehicle by the vehicle safety belt or by ISOfix anchorages and, in some circumstances, by the surface of the instrument panel itself. With the child seat held so securely within the vehicle in this way, there is no need to deploy the passenger's frontal airbag, which is configured to restrain forward facing adults and not rearward facing child seats.

Airbag cut-off switches are not integrated into the restraint system, and thus become safety critical parts. They must meet stricter performance requirements than other switches in the vehicle, increasing their cost. Additionally, the cut-off switch must be accessible and readily operated by a responsible adult, without the risk of a child playing with the switch and inadvertently re-activating the airbag. Another feature of such a manually operated airbag cut-off switch is that it is possible for the driver to forget to re-activate the airbag when transporting an adult passenger after transporting a rearward facing infant in the front passenger seat.

Many countermeasures have been proposed to manage this situation but most are either costly to produce, or a source of irritation to the driver. Known warning systems employing warning lights may be confusing, or even be missed by the driver while he/she is concentrating on road and traffic conditions. Other systems employing an audible warning such as a buzzer or chime are not always recognised by the driver as indicating a warning related to the status of the passenger airbag, and as such are regularly criticised as being a source of annoyance.

It is against this background that the present invention has been conceived. It is an aim of the present invention to address the issue of improved ease of use, whilst minimising the likelihood of inadvertent deactivation. In addition, the present invention offers a reduction in parts complexity compared to known systems. Aspects and embodiments of the invention may provide a restraint control apparatus for a vehicle occupant restraint system and a method of operating the same. Other embodiments of the invention may provide a means for selectively changing the active status of a vehicle occupant restraint via a user interface. This approach greatly improves the packaging and effectiveness of the restraint control apparatus whilst reducing assembly time, mass and cost. Other aims and advantages of the invention will become apparent from the following description, claims and drawings.

### Summary of the invention.

According to an aspect of the present invention there is provided a control apparatus for a vehicle occupant restraint system having at least one deployable occupant restraint, the control apparatus comprising: a display means; a user input means; and a restraint system controller, wherein the restraint system controller is arranged to generate a menu of options that is presented to the user via the display means and to control the status of the deployable occupant restraint in dependence on a selection made by the user via the input means.

Advantageously, the present invention integrates the functionality of an airbag deactivation or `cut-off' switch into the vehicle, without the need for a dedicated mechanically operated electrical switch. This reduces assembly time and cost, whilst improving the reliability of the electrical system by reducing the complexity. The present invention offers means to deactivate the airbag with improved robustness against inadvertent or accidental deactivation, for example in the case where a non-authorised user attempts to deactivate the airbag.

In an example, the control apparatus for the vehicle occupant restraint system is configured to allow reactivation of the vehicle occupant restraint system, as well as deactivation of the vehicle occupant restraint system, and as an opposing action thereto.

In an example, the menu of options generated by the restraint system controller comprise a series of prompts, and the restraint system controller controls the status of the deployable occupant restraint in dependence on the response made by the user to said prompts.

In an example, the prompts generated by the restraint controller comprise: an asset identifier specific to a given deployable occupant restraint, and a security question, wherein the status of the deployable occupant restraint is only changed by the restraint controller after it receives a response to the security question corresponding to a pre-determined response matching the asset identifier selected by the user.

Such a user interface, provided by the combination of the restraint controller, display means and input means, is intended to mitigate the risk of inadvertent activation or deactivation, especially by an unauthorised user. Advantageously, the use of a prompt for a specific input, maintains or even improves upon the robustness of a manually operated key-type switch without the associated complexity, costs and assembly time.

In an example, the restraint controller is further provided with a vehicle input arranged to provide the restraint controller with information relating to vehicle occupancy.

In an example, the vehicle input comprises status data of any one or more of the following vehicle components: safety belt buckle latch, seat cushion pressure sensor, door ajar sensor, seat position sensor, seat occupancy sensor, vehicle speed sensor and vehicle ignition condition sensor.

I n an example, the restraint controller is arranged to generate a menu and/or prompt in dependence on the vehicle input and to present the menu and/or prompt via the display means to the user.

Advantageously, the present invention is arranged to remind the driver if they forget to re-activate the airbag when transporting an adult passenger in the front passenger seat. The present invention does not require the user to insert a vehicle key into a manually operated deactivation switch, as is often the case with known systems. This provides the advantage that the user may correct an inappropriate status setting for a deployable restraint without necessarily stopping the vehicle. This is not always possible with the known manually operated electrical deactivation switch.

In an example, the security question is generated by the restraint controller in dependence on the status data relating to vehicle occupancy provided to the restraint controller by the vehicle input.

Advantageously, providing the restraint controller with information pertaining to the occupancy of the vehicle enables the restraint controller to automatically present the user with an appropriate menu and/or prompt to change the status of a deployable occupant restraint. This ensures that the user is only prompted for a response when it is appropriate to do so, avoiding unnecessary distraction of the driver. Similarly, if the vehicle occupancy were to change during a journey, for example where the driver collects a passenger en-route to the destination, the restraint controller of the present invention would notify the user of that change, and generate the appropriate menu with which the user may take appropriate action.

In an example, the restraint controller menu incorporates icons or graphics, for ease of use.

According to another aspect of the present invention for which protection is sought there is provided a method of changing the status of a deployable occupant restraint in a vehicle, the method comprising: activating a restraint system controller apparatus in response to an ignition-on signal; comparing data from a vehicle input with data held in a look-up table and determining the occupancy of the vehicle based on that comparison, and generating a menu presented to the user via a display means, wherein upon receipt of a selection from the menu made by the user via an input means, the restraint system controller generates a security question presented to the user via said display means, and upon the restraint system controller receiving a response from the user matching an authorised command held in the look-up table, the restraint system controller changes the status of the deployable occupant restraint.

In an example, the method according to the preceding paragraph further comprises the step of responding to a response to the security question from the user that does not match the authorised command held in the look-up table, the restraint system controller generating a new security question or closing the menu on the display means.

According to a further aspect of the present invention for which protection is sought, there is provided a vehicle comprising a control apparatus according to any preceding paragraph.

In an example, the control apparatus comprises display means, and user input is provided by a touch-sensitive display integrated into the vehicle.

According to a still further aspect of the present invention for which protection is sought there is provided a vehicle according to any preceding paragraph, wherein the vehicle controls the status of a deployable occupant restraint in accordance with the method above.

Within the scope of this application it is envisaged that the various aspects, embodiments, examples, features and alternatives set out in the preceding paragraphs, in the claims and/or in the following description and drawings may be taken independently or in any combination thereof. In particular, features described in connection with one embodiment are applicable to the other embodiment, except where there is an incompatibility of features.

### Brief Description of the Drawings

The present invention will now be described, by way of example only, with reference to the accompanying drawings in which:
Figure 1 shows a schematic view of a known deployable occupant restraint deactivation system;
Figure 2 shows a schematic view of an example of a deployable occupant restraint deactivation system of the present invention; and
Figure 3 shows a schematic view of an alternative example of a deployable occupant restraint deactivation system of the present invention.

While the examples given for suitable applications for the present invention relate to deployable restraint deactivation systems for passenger vehicles, it will be appreciated by one skilled in the art that there are potentially other uses for the present invention with vehicles not intended for carrying passengers, such as trucks or other such commercial vehicles.

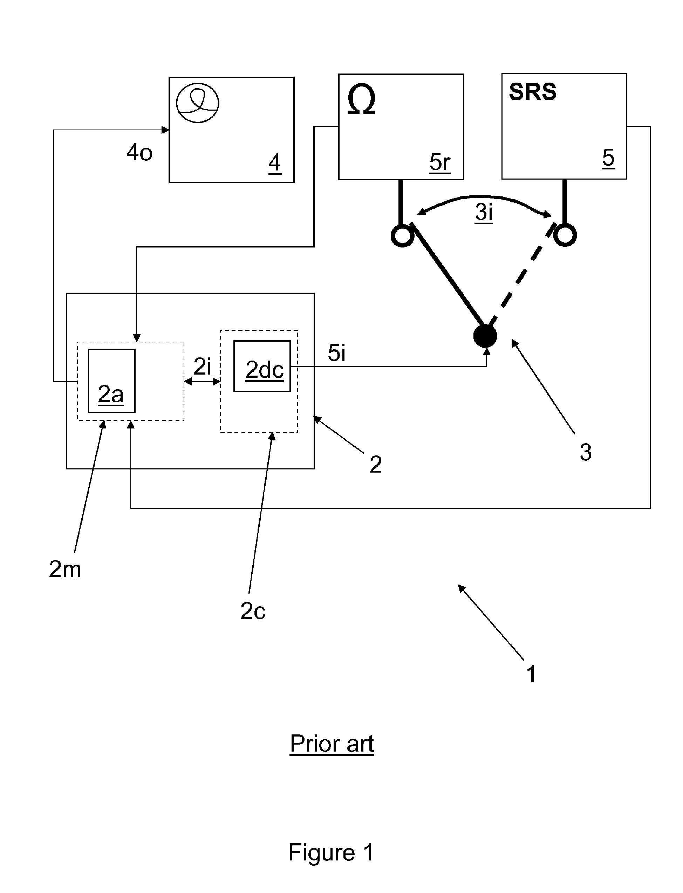

Figure 1 shows an example of a known deployable occupant restraint deactivation system for a passenger vehicle (not shown). The deployable occupant restraint deactivation system is indicated generally at 1 and comprises a control unit or sensor deployment module (SDM) 2, a deactivation or 'cut-off' switch 3, a deployable restraint 5, a dummy or substitute resistive load 5r and a warning indicator or lamp 4. The deployable restraint 5 is typically one or more airbag(s) and/or a safety belt pretensioner, typically arranged to provide restraint to a vehicle occupant such as a front seat passenger.

The control unit or SDM 2 comprises a sensor (not shown) configured to detect changes in vehicle acceleration, enabling the SDM 2 to detect an event such as a vehicle collision that may require the deployment of deployable occupant restraints such as airbags and/or seatbelt pretensioners. The SDM 2 further comprises a controller 2m typically in the form of a micro-processor and an algorithm 2a, which the controller 2m employs to interpret the output from the sensor and determine if and when a deployment signal 2i should be generated. The algorithm 2a includes a calibration, optimised for a given vehicle, providing the controller 2m with the necessary information regarding the deployable restraints fitted to the vehicle and controlled by the controller 2m.

The controller 2m of the SDM 2 is connected electrically to a deployable restraint interface 2c which comprises at least one deployment logic control IC or DLIC 2dc, typically provided by one or more MOSFETs or ASICs. The DLIC 2dc is arranged to manage the electrical current required to deploy the deployable restraints and is under the control of the controller 2m. The DLIC 2dc is arranged to deploy the restraints in dependence on the deployment signal 2i generated by the controller 2m. Upon receipt of the deployment signal 2i, the DLIC 2dc sends a deployment command 5i to the deployable restraints 5. It will be appreciated that the deployment command 5i is typically of a greater voltage and current than the deployment signal 2i.

The deployable restraint interface 2c is not only responsible for managing the deployment of the restraints 5, but also performs a regular system diagnosis of all the deployable restraints 5, ensuring their readiness during vehicle use. If a fault occurs in either the deployable restraint 5 or an associated electrical connection, the deployable restraint interface 2c will detect the fault and generate a fault code. If a fault code is generated, the SDM 2 will notify the user of the fault via a suitable indicator such as a warning lamp (not shown). To minimise the risk of confusing or misleading the user, this warning lamp is separate from the lamp 4. Lamp 4 is only used to notify the user of the status of a user-deactivated deployable restraint 5. Should such a fault be detected, the user once notified, should have the vehicle checked by authorised personnel immediately and have the fault corrected.

The deactivation or 'cut-off' switch 3 of the known restraint system gives the user the option to temporarily de-activate a deployable occupant restraint such as an airbag for the occupant of the front seat. The user may wish to deactivate the airbag when transporting an infant on the front passenger seat in a rearward facing child seat. With the child restrained securely in the rearward facing child seat, there is no benefit in deploying the front passenger side airbag in a frontal collision, as the front airbag is optimised for restraining a forward facing adult and not a rearward facing child seat.

It may be seen from Figure 1 that the airbag deactivation switch 3, which is arranged to be accessible to the user in the vehicle, switches between one or more deployable occupant restraints 5 and the substitute resistive load 5r. The substitute resistive load 5r is arranged to provide an electrical resistance equivalent to that of the one or more deployable occupant restraints 5. In this way, if the SDM 2 performs a diagnosis check of the restraints system, the electrical resistance will remain the same regardless of the active status of the deployable restraints 5. Thus, the SDM 2 will not generate a fault code when a deployable restraint 5 has been deliberately deactivated. This substitution of electrical load has the benefit that the DLIC 2dc drives the same electrical load when all the deployable restraints 5 are active as when some have been deliberately deactivated. This ensures that the DLIC 2dc operates under the same conditions regardless of the active status of some of the deployable restraints 5, greatly improving the reliability of the DLIC 2dc. Typically, the resistance of a single vehicle airbag or safety belt pretensioner is around 2 ohms.

The user selectively deactivates the deployable restraint 5 for a given seating position within the vehicle by moving the deactivation switch 3 from an active status position, to a deactivated status position. In the active status position, the DLIC 2dc is connected to the deployable restraint 5. In the deactivated status position, the switch 3 disconnects the restraint 5 from the DLIC 2dc and substitutes the connection with that of the substitute resistive load 5r. In this way, when the user selects a deactivated status, the affected deployable restraint 5 is temporarily disconnected from the DLIC 2dc and therefore cannot deploy.

In the known system 1, shown in the Figure, the substitute resistive load 5r is selected by a user input 3i via the switch 3. Upon receipt of an input 3i corresponding to a deactivated status, the controller 2m is notified that the restraint 5 has been deactivated deliberately. Once the controller 2m is notified of an intentional deactivation, the SDM 2 sends a warning signal 4o to the warning lamp 4, illuminating the lamp 4 to remind the user of the deactivated status of the deployable restraint 5. The warning lamp is intended to remain illuminated and in view of the driver at all times when the restraint is in the deactivated status, minimising the chance of the user forgetting to reactivate the restraint when it would be appropriate to do so.

In the event of a severe vehicle event, sufficient to justify deployment of the restraints, the controller 2m issues a deployment signal 2i to the DLIC 2dc. Upon receipt of the deployment signal 2i, the DLIC 2dc sends a deployment command 5i to one or more deployable restraints 5 as is appropriate for the vehicle event. If the input 3i made by the user corresponds to the deployable restraints 5 being active, then the deployment command 5i issued by the DLIC 2dc deploys all of the restraints 5 as appropriate to the event. However, if the user has deactivated one or more deployable restraints 5 via the appropriate input 3i, the deployment command 5i issued by the DLIC 2dc to those deactivated restraints 5 is directed via the switch 3 to the substitute resistive load 5r and the deactivated restraint 5 will not be deployed.

In the example shown in Figure 1, the deployable restraint 5 of the restraint deactivation system 1 is switched from an active to a deactivated status by a mechanically operated electrical switch 3. This switch 3 is typically located in the vicinity of the vehicle instrument panel (not shown), either on the side adjacent to the passenger's side door or in or adjacent to a glove compartment (also not shown), located in front of the front passenger.

In the most basic systems used in passenger vehicles, the switch 3 may be operated by hand. The user need only press or twist the switch in order to operate it, effecting a change in the status of a deployable occupant restraint 5. In such systems, there is little to prevent misuse of the deactivation switch 3 and so the user must rely on the warning lamp 4 to monitor the status of the restraint 5 and remind him or her when the restraint 5 is deactivated when it should not be, or vice versa, so that appropriate action may be taken.

In some cases, the switch 3 may be operated only upon insertion of the vehicle ignition key into the switch. In this way, the status of the deployable restraint 5 may not be changed without removing the key from the vehicle ignition system. Whilst this mitigates the chances of the switch 3 being operated by unauthorised personnel, it can lead to a reluctance on the part of the user to change the restraint status once the journey is underway.

The present invention seeks to address these issues whilst at the same time providing the user with a convenient and intuitive user interface which is less prone to misuse than known deployable restraint deactivation systems.

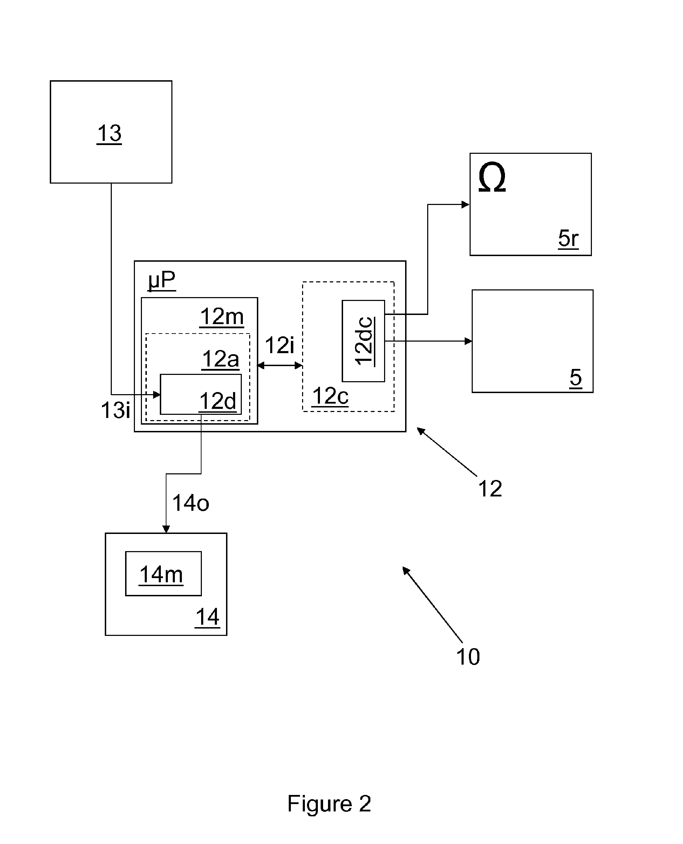

Figure 2 shows a schematic view of an example of a deployable restraint deactivation system 10 of the present invention. For clarity, like reference numerals indicate like parts.

The deployable restraint deactivation system 10 shown in Figure 2 comprises: a control apparatus in the form of a restraint controller or advanced sensor deployment module (ASDM) 12; one or more deployable occupant restraints 5; a user input means 13; and a display means 14. In the example shown in the Figure, the deployable restraint deactivation system 10 further comprises a substitute resistive load 5r. The functionality and purpose of the or each deployable occupant restraint 5 and substitute resistive load 5r are identical to those in the known system 1 as described above and as shown in Figure 1.

The ASDM 12 of the present invention comprises a controller 12m, comprising a microprocessor, arranged to operate in dependence on an algorithm 12a, and configured to control a number of deployable occupant restraints 5. The controller 12m further comprises a display driver 12d, arranged to generate an output 14o for driving the display means 14 in response to a given user input 13i. The ASDM 12 further comprises a deployable restraint interface 12c arranged to communicate with the deployable restraints 5 and to deploy them, where appropriate, via at least one deployment logic control IC or DLIC 12dc.

To deactivate the or each deployable occupant restraint 5, the user must first make an appropriate selection via the input means 13. Upon receipt of the user input 13i, the controller 12m and display driver 12d activate a safety system menu 14m, which is presented on the display means 14. The system 10 is arranged to be active whenever the vehicle is in use. In a preferred example of the system 10 of the present invention, the system 10 is only deactivated when the vehicle ignition is switched off.

Once activated, the safety menu 14m presents the user with at least two options. The first option is to change the current status of at least one deployable occupant restraint 5. The second option is to cancel, which closes the safety system menu 14m. The user makes his/her selection from the options presented in the safety system menu 14m via the user input means 13. If the user has inadvertently or accidentally activated a safety system menu 14m, the option to cancel may be used which causes the system 10 to quit out of the safety system menu 14m and leave the current status of the deployable occupant restraint 5 unchanged.

If the user chooses to change the status of the or each deployable occupant restraint 5, the user makes the appropriate selection 13i via the input means 13. Upon receipt of the of the user input 13i, the controller 12m sends a deactivation status signal 12i to the deployable restraint interface 12c. If the deactivation status signal 12i is a command to deactivate a deployable restraint 5, the DLIC 12dc responsible for the deployment of the restraint 5 in question is temporarily deactivated or, as in the case of the example shown in the Figure, switched to connect to the substitute resistive load 5r. In this deactivated condition, the deployable restraint interface 12c confirms that the deployable restraint 5 in question has been successfully deactivated and signals that confirmation via the returned deactivation status signal 12i to the controller 12m. Upon receipt of this confirmation, the controller 12m issues a status notification to the user, either via the display means 14, or via a dedicated warning lamp or the like (not shown).

With the deployable restraint deactivation system 10 of the present invention, there is no longer a requirement for a mechanically operated electrical switch to deactivate the deployable restraints 5. Unlike the known deactivation system 1 of Figure 1, with the system 10 of the present invention there is no direct connection between the user input means 13 and the deployable restraint 5. This removes a switch from the wiring harness of the vehicle restraints system and accordingly improves system robustness whilst reducing parts complexity. Similarly, as the deployable restraint deactivation system 10 of the present invention does not require a mechanically operated switch, there is no need for the user to remove the vehicle key from the vehicle ignition system to effect a change in the status of the deployable restraint 5.

The deployable restraint deactivation system 10 of the present invention has the further advantage over the known system 1, that the system 10 may be configured so as to be operable by the user whilst the vehicle is in motion. This improves its ease of use, and removes a known cause of misuse with known deactivation systems 1. It will be appreciated that the display means 14 may be shared with other vehicle components such as an entertainment system, a navigation system, a vehicle information display console or an instrument cluster or combi-meter. This serves to reduce parts complexity and assembly time whilst optimising the use of space within the vehicle, especially where the display is located and orientated so as to be clearly visible to the driver of the vehicle whilst driving the vehicle.

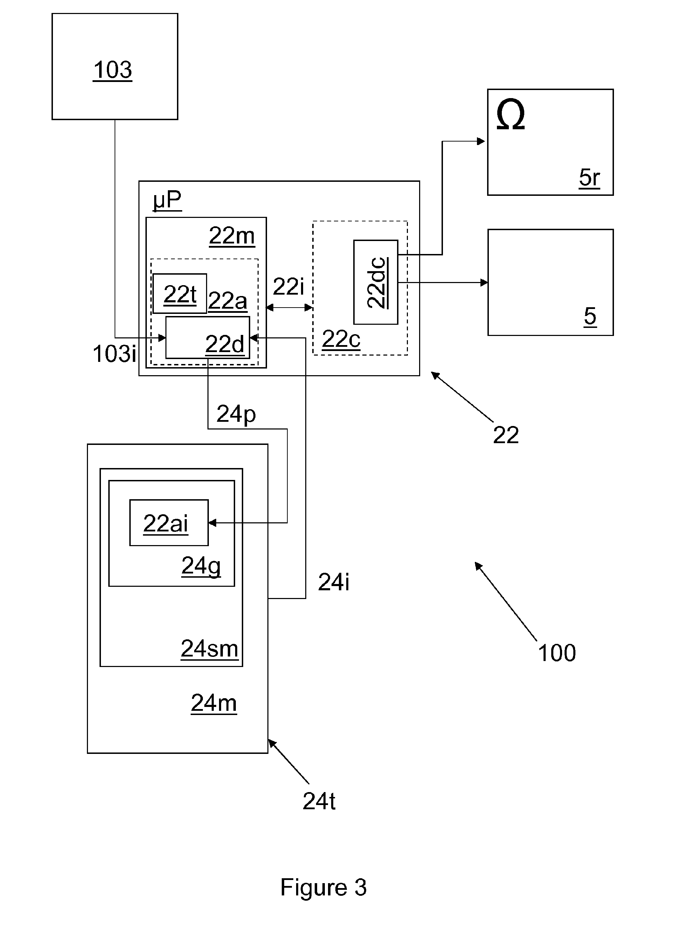

Figure 3 shows an alternative example of the present invention where a deployable restraint deactivation system 100 is provided with a touch sensitive screen 24t arranged to provide the function of both the display means and the input means employed by the system 10 described above. Use of a touch sensitive screen 24t negates the need for a separate input means, reducing assembly time; and removes any restrictions on positioning of the input means relative to the driver, which may otherwise prove difficult. The use of a touch sensitive screen 24t provides a more intuitive user interface means as compared to a separate display means and input means. In this example, the user may navigate around menus and options displayed in a pictographic or graphical form, rather than purely text. This provides a universal user interface that may be used across many markets, without the need for translation into multiple languages.

In this example, the user makes their selection by touching an icon or graphic 24g displayed on the touch sensitive screen 24t. The graphic 24g is associated with a vehicle safety system menu 24m and, once selected by the user, displays a sub-menu 24sm with a number of options to allow the user to quit out of the safety system menu 24m or to deactivate one or more deployable restraints 5.

The deployable restraint deactivation system 100 shown in Figure 3 comprises: a control apparatus in the form of a restraint controller or advanced sensor deployment module (ASDM) 22, a display driver 22d, and a deployable restraints controller 22m, arranged to generate a safety system menu 24m in response to a user input 24i made by the user via the touch sensitive screen 24t. The system 100 further comprises: a deployable restraint interface 22c; a deployment logic integrated circuit (DLIC) 22dc; a deployable restraint 5; and a substitute resistive load 5r, all of which operate in the same way as in the system 10 of Figure 2.

In this example, the controller 22m, following an algorithm 22a, refers to a preinstalled look-up table 22t. Once the safety system menu 24m, generated by the controller 22m, is presented on the display 24t, the algorithm 22a accesses the look-up table 22t. The safety system menu 24m initially presents the user with two options: change the active status of a deployable restraint 5; or cancel. If the user selects the cancel option, the controller 22m closes the safety system menu 24m and the touch sensitive display 24t presents either a default display or the last display used before the safety system menu 24m was accessed, whichever is set in a separate user-defined display settings menu.

If the user responds to the safety system menu 24m by selecting the option to change the active status of a deployable restraint 5, the controller 22m generates a sub-menu 24sm to the safety system menu 24m, in which the user is presented with several options. Each of these options are held in the look-up table 22t, from which the controller 22m is given the identity, location and status of each deployable restraint 5 in the vehicle that may be deactivated by the user. The controller 22m generates an activity status indicator for each deployable restraint 5 that the system 100 will permit the user to change, and presents them as options on the touch sensitive display 24t.

When the user chooses to change the activity status of a deployable restraint 5 from the safety system menu 24m, he or she is presented with the safety system sub-menu 24sm, which displays on the touch sensitive display 24t a series of icons or graphics 24g associated with the restraint deactivation options available. The restraint deactivation options are prescribed by the look-up table 22t, which may be configured to suit any given vehicle variant or type.

The restraint deactivation options are held in the look-up table 22t in the form of asset identifiers 22ai. Each asset identifier 22ai may represent a specific deployable restraint 5 or a number of deployable restraints 5 associated with a given seating position within the vehicle, representing the restraint deactivation options available. The look-up table 22t only holds asset identifiers 22ai for deployable restraints 5 that may be deactivated by the user. In this way, a vehicle manufacturer may withhold the capacity to deactivate a particular deployable restraint 5 where appropriate, to prevent misuse of the vehicle occupant restraints system.

The algorithm 22a in the controller 22m is arranged to compare a user input 24i made using the touch sensitive display 24t, with the data held in the look-up table 22t associated with the graphic 24g selected by the user. The controller 22m issues a prompt 24p to the user via the display 24t. The prompt 24p contains a security question held in the look-up table 22t associated with the asset identifier 22ai in question. In order to effect a change in activity status of the deployable restraint 5 in question, the user must answer the security question in the prompt 24p with an appropriate response 24i. The correct answer to the prompt 24p is held in the look-up table 22t. Upon receipt of the response 24i, the controller 22m compares the response 24i with the data held in the look-up table 22t, if the response 24i matches the data held in the look-up table 22t, the controller accepts the response as an authorised command. Upon receipt of an authorised command, the controller 22m sends a deactivation status signal 22i to the deployable restraint interface 22c. The deactivation status signal 22i changes the active status of the deployable restraints 5 associated with the restraint deactivation option selected by the user.

If the user answers the security question of prompt 24p incorrectly, an alternative security question is presented to the user. The alternative security question and the associated pre-determined response are both held in the look-up table 22t. The use of an alternative security question and response combination provides the user with a second chance to prove to the system 100 that they are authorised to change the activity status of a deployable restraint 5. If the user fails to answer the alternative security question correctly, the controller 22m is arranged to close the sub-menu 24sm and to return to the safety system menu 24m.

The response to the security question may be made by the user via the touch sensitive display 24t or by operating another suitable user interface such as a keypad, fingerprint or iris scanner or by voice recognition as may be appropriate to the vehicle.

The deployable restraint deactivation system 100 is further provided with a vehicle input 103, arranged to integrate the system 100 into the vehicle and to provide for additional functionality based on the presence or status of other vehicle components. Vehicle components such as safety belt buckle latches, seat cushion pressure sensors, door ajar sensors, seat position sensors, seat occupancy sensors, vehicle speed sensors and even the vehicle ignition condition provide status data that may be monitored via the vehicle input 103 and used by the system 100 to predict or detect when the occupancy of the front passenger seat has been or will be changed. The vehicle input 103 may be provided by a dedicated means of monitoring the status of key vehicle components, or may be a connection to the vehicle via a controlled area network or CANbus link or the like. In this way, the system 100 may automatically generate a safety system menu 24m whenever it detects a situation where the occupancy of the vehicle may have changed, providing an automatic reminder to the driver. The automatic reminder may be dismissed via a user input; or simply ignored and allowed to either time-out, or to be acted upon by the user later, as appropriate.

An advantage of the deployable restraint deactivation system 10, 100 of the present invention is that, as there is no dedicated deactivation switch 3, it is less prone to improper use by unauthorised users. In the case of the present invention, the deactivation menu is only generated in response to a pre-determined user input.

Other advantages will be apparent to one skilled in the art and the present examples and embodiments are to be considered illustrative and not restrictive. The invention is not to be limited to the details given herein, but may be modified within the scope and equivalence of the appended claims.

## Claims

1. A deactivation system (10, 100) for a vehicle occupant restraint system having at least one deployable occupant restraint (5), the deactivation system comprising:
a display means (14, 24);
a user input means (13, 24); and
a restraint system controller (12, 22), **characterized in that**:
the restraint system controller is arranged to generate a menu of options (14m, 24m) that is presented to the user via the display means (14, 24) and to control the status of the deployable occupant restraint (5) in dependence on a selection made by the user via the input means (13, 24).

2. A deactivation system (10, 100) for a vehicle occupant restraint system as claimed in claim 1, **characterized in that** the system is configured to allow reactivation of the vehicle occupant restraint system, as an opposing action to deactivation of the vehicle occupant restraint system.

3. A deactivation system (100) as claimed in claim 1 or claim 2, wherein the menu of options (24m) generated by the restraint system controller (22) comprises a series of prompts (24p), and the restraint system controller (22) is arranged to control the status of the deployable occupant restraint (5) in dependence on the response made by the user to said prompts (24p).

4. A deactivation system (100) as claimed in claim 3, wherein the prompts (24p) generated by the restraint system controller (22) comprise:
an asset identifier (22ai) specific to a given deployable occupant restraint (5); and
a security question;
wherein the status of the deployable occupant restraint (5) is only changed by the restraint system controller (22) after it receives a response to the security question corresponding to a pre-determined response matching the asset identifier (22ai) selected by the user.

5. A deactivation system (10, 100) according to any preceding claim, wherein the restraint system controller (12, 22) is further provided with a vehicle input (13, 103) arranged to provide the restraint system controller with information relating to vehicle occupancy.

6. A deactivation system (10, 100) according to claim 5, wherein said vehicle input (13, 103) comprises status data of any one or more of the following vehicle components: safety belt buckle latch, seat cushion pressure sensor, door ajar sensor, seat position sensor, seat occupancy sensor, vehicle speed sensor, and vehicle ignition condition sensor.

7. A deactivation system (10, 100) as claimed in claim 5 or claim 6, wherein the restraint system controller (12, 22) is arranged to generate a menu (14m, 24m) and/or prompt (24p) in dependence on the vehicle input (13, 103) and to present the menu (14m, 24m) and/or prompt (24p) via the display means (14, 24) to the user.

8. A deactivation system (10, 100) according to claim 5, claim 6 or claim 7 when dependent upon claim 4, wherein the security question is generated by the restraint system controller (12, 22) in dependence on the status data relating to vehicle occupancy provided to the restraint system controller by the vehicle input (13, 103).

9. A deactivation system (100) according to any preceding claim, wherein the menu (24m) incorporates icons or graphics (24g).

10. A method of changing the status of a deployable occupant restraint (5) in a vehicle, the method comprising:
activating a restraint system controller apparatus (22) in response to an ignition-on signal;
comparing data from a vehicle input (103) with data held in a look-up table (22t) and
determining the occupancy of the vehicle based on that comparison; and
generating a menu (24m) presented to the user via a display means (24);
wherein upon receipt of a selection from the menu (24m) made by the user via an input means (24), the restraint system controller (22) generates a security question presented to the user via said display means (24), and
upon the restraint system controller (22) receiving a response from the user matching an authorised command held in the look-up table (22t), the restraint system controller (22) changes the status of the deployable occupant restraint (5).

11. A method according to claim 10, further comprising the step of responding to a response to the security question from the user that does not match the authorised command held in the look-up table (22t), the restraint system controller (22) generating a new security question or closing the menu (24m) on the display means (24).

12. A vehicle comprising a deactivation system (10, 100) according to any of claims 1 to 9.

13. A vehicle according to claim 12, wherein the deactivation system (100) comprises display means and user input provided by a touch-sensitive display (24) integrated into the vehicle.

14. A vehicle according to claim 12, wherein the vehicle controls the status of a deployable occupant restraint (5) in accordance with the method of claim 10 or claim 11.
